# FASCICULE DE BREVET EUROPEEN

(11) **EP 0 774 094 B1**
(45) Date de publication et mention de la délivrance du brevet: **13.02.2002**
(21) Numéro de dépôt: 96920874.3
(22) Date de dépôt: 31.05.1996
(51) Int. Cl.: F16N 7/32

(54) **PROCEDE DE LUBRIFICATION D'ORGANES MECANIQUES ET DISPOSITIFS PERMETTANT DE LE METTRE EN UVRE**
VERFAHREN ZUR SCHMIERUNG VON MECHNANISCHEN TEILEN UND EINRICHTUNGEN ZUR DURCHFÜHRUNG DES VERFAHRENS
MECHANICAL UNIT LUBRICATION METHOD AND DEVICES FOR IMPLEMENTING SAME

(30) Priorité: 06.06.1995 FR 9506739
(43) Date de publication de la demande: 21.05.1997
(73) Titulaire: Renault Automation Comau, 92365 Meudon La Forêt Cedex (FR)
(72) Inventeur: LAUR, Raymond, F-81290 Viviers-les-Montagnes (FR)
(74) Mandataire: Richebourg, Michel François
(86) Numéro de dépôt international: FR9600817
(87) Numéro de publication internationale: WO9639593

(56) Documents cités:
- EP-A- 0 502 823
- FR-A- 1 100 689
- FR-A- 2 571 825
- US-A- 2 719 604
- US-A- 3 939 944

## Description

La présente invention a trait à la lubrification d'organes mécaniques et concerne plus particulièrement la lubrification par projection de brouillard d'huile sur lesdits organes.

La conception du dispositif de lubrification des organes mécaniques d'une machine-outil a une grande influence sur la performance des organes et par conséquence sur celles de la machine.

Actuellement, la lubrification des organes mécaniques contenus dans un carter est réalisée suivant différents modes de procédés.

L'un de ceux-ci met en oeuvre une lubrification à la graisse. La présence de cette graisse, généralement à vie, donne de faibles pertes de frottement en raison de la quantité réduite de lubrifiant qui travaille dans les organes mécaniques. Cependant, la lubrification à la graisse n'autorise pas des vitesses aussi élevées qu'avec une lubrification à l'huile car elle engendrerait une durée d'utilisation anormalement courte. En outre, les équipes d'entretien rebutent souvent à l'emploi de ce mode de lubrification.

Un autre d'entre eux met en oeuvre la lubrification à l'huile par projection à partir d'un bain d'huile. Bien qu'efficace sous faible vitesse, ce mode de lubrification exige une quantité d'huile plus importante aux vitesses élevées ce qui a pour conséquence d'augmenter le frottement et par conséquent la température des organes mécaniques.

Un autre d'entre eux met en oeuvre la lubrification par circulation d'huile dans lequel cette dernière est projetée ou pompée jusqu'à niveau supérieur dépassant celui des organes mécaniques à travers lesquels elle s'écoule. Mêmes remarques que celles relevées pour le mode de lubrification par projection aux vitesses élevées.

Un autre d'entre eux met en oeuvre la lubrification par gouttes d'huile dans lequel celle-ci est alimentée à intervalles réguliers et en quantités déterminées. Ainsi, il est possible d'obtenir un dosage précis de la quantité d'huile notamment aux grandes vitesses permettant d'avoir des pertes de frottement réduites. Ce mode de lubrification est difficile à intégrer dans des carters à organes mécaniques multiples car la pénétration de l'huile dans lesdits organes reste incertaine et dépend de la vitesse de ceux-ci.

Un autre d'entre eux met en oeuvre la lubrification par circulation avec refroidissement dans l'huile, utilisée pour les grandes vitesses. Ainsi, une grande quantité d'huile peut être forcée à travers le roulement engendrant une chaleur élevée qui sera véhiculée par l'huile afin d'être refroidie à l'extérieur du carter avant d'être à nouveau réinjectée dans celui-ci. Ce mode de lubrification offre l'avantage d'abaisser la température de fonctionnement à des vitesses élevées mais engendre malgré tout des pertes de frottement importantes. En outre, son coût est élevé car sa mise en oeuvre nécessite un équipement complexe et relativement sophistiqué notamment pour assurer les opérations de pompage et de refroidissement.

Un autre d'entre eux met en oeuvre la lubrification air-huile permettant d'alimenter les organes mécaniques du carter selon des quantités extrêmement faibles à partir de quelques dizaines de milligrammes par heure selon la taille des organes. Pour assurer cette lubrification des organes mécaniques à de telles quantités d'huile et de façon fiable, l'huile est introduite, à l'aide d'un injecteur et à des intervalles déterminés, dans une conduite dans laquelle elle est acheminée jusqu' au carter à l'aide de l'air comprimé. Ainsi, l'huile est introduite séquentiellement par l'injecteur et répartie le long des parois de la conduite par l'air comprimé qui agit en permanence pour la faire progresser lentement, pour être finalement injectée dans le carter à travers une buse provoquant une surpression dans l'organe mécanique. Si une lubrification air-huile représente une amélioration appréciable du point de vue efficacité, elle recèle néanmoins des inconvénients au niveau de la réalisation car son installation est complexe (micro-pompes, séquenceurs, buses pour chaque organe mécanique) grevant considérablement le coût. De plus, cette lubrification est difficile à intégrer dans des carters à broches multiples.

Un autre d'entre eux met en oeuvre la lubrification par brouillard d'huile dans lequel de très fines gouttelettes d'huile sont acheminées par de l'air sous pression. Ce mode de lubrification est le plus usité pour les organes mécaniques tournant à grande vitesse. La matérialisation de ce principe mis en oeuvre par le dispositif décrit dans le brevet français n° 2 571 825, consiste à mettre sous pression l'intérieur du carter renfermant les organes mécaniques dans lequel débouche au moins un pulvérisateur alimenté d'une part en air sous pression et d'autre part en huile à partir d'un réservoir de stockage disposé à distance. L'huile du réservoir est alors aspirée par le pulvérisateur, et le brouillard ainsi formé dans le carter lubrifie les organes mécaniques. Une conduite dite de retour installée entre le carter et le réservoir permet à l'air de s'échapper dans l'atmosphère, à travers un condenseur situé éventuellement sur le réservoir, à des fins de restitution de l'huile filtrée. Ce fonctionnement en circuit fermé a également pour avantage de pouvoir amener l'eau éventuellement présente dans le carter, vers le réservoir où elle peut être détectée et évacuée sans problème. Ce mode de lubrification représente un inconvénient au niveau du dosage des quantités minimales d'huile nécessaires, de sorte, que l'alimentation est souvent trop surabondante par rapport aux besoins, entraînant de ce fait une augmentation du frottement et de la température et des risques de pertes de brouillard d'huile à l'extérieur.

De plus, la caractéristique consistant à utiliser un pulvérisateur directement lié au carter à lubrifier entraîne que le fonctionnement d'un tel dispositif dépend de la distance le séparant du réservoir de stockage de l'huile ainsi que des pertes de charges dans les tuyaux.

Partant de ces constatations, la demanderesse a mené des recherches ayant pour objet l'étude d'une lubrification par brouillard d'huile optimisée. Ces recherches l'ont amené à s'appuyer sur un procédé mis en oeuvre par le dispositif décrit dans le brevet américain n° 3 939 944. Ce procédé de lubrification d'organes mécaniques contenus dans au moins un carter étanche par projection de brouillard d'huile dans l'enceinte dudit carter est du type de celui consistant
- d'une part, à créer un brouillard d'huile à l'intérieur d'un réservoir de stockage d'huile et à aspirer une quantité de ce brouillard pour l'injecter dans l'enceinte du susdit carter,
- et d'autre part, à récupérer le brouillard d'huile et/ou les condensats dans le carter afin de les restituer à l'intérieur du réservoir.

Ce dernier est avantageusement mis en oeuvre par un dispositif du type de celui comportant
- un réservoir de stockage d'huile,
- au moins un pulvérisateur raccordé à une alimentation d'air sous pression pour générer un brouillard d'huile,
le susdit réservoir de stockage d'huile étant relié, via une première conduite aller et une deuxième conduite retour, audit carter étanche, et
le susdit pulvérisateur étant installé sur le susdit réservoir où il débouche à l'intérieur de la chambre supérieure et où il est alimenté d'une part, en air sous pression, et d'autre part, en huile par aspiration à partir de la chambre inférieure dudit réservoir, le susdit pulvérisateur étant disposé sur une troisième conduite reliant la chambre inférieure à la chambre supérieure dudit réservoir.

Ce dispositif présente de nombreux avantages parmi lesquels :
- il crée un volume de brouillard d'huile à l'intérieur du réservoir de stockage d'huile lui-même et aspire une quantité de ce brouillard pour l'injecter dans l'enceinte du susdit carter et non de pulvériser directement à l'intérieur de ce dernier,
- il permet de diluer la quantité de brouillard d'huile prélevée en sortie du réservoir avant de l'injecter dans le carter ce qui autorise un dosage de la richesse du brouillard avant sa projection dans le carter, en intervenant uniquement au niveau du processus d'acheminement du brouillard alors que dans l'art antérieur, le dosage de la richesse du brouillard est activé au niveau du processus de création même du brouillard. De plus, le contrôle de la qualité du brouillard est plus facile à mettre en oeuvre au niveau du réservoir d'huile qu'au niveau du carter à lubrifier.
Néanmoins, le dispositif tel que décrit n'est pas susceptible de créer en permanence un brouillard d'huile. En effet, la création du brouillard d'huile à l'intérieur de la chambre supérieure du réservoir de stockage dépend de l'évacuation du brouillard d'huile de ce dernier c'est à dire du branchement du réservoir avec un carter demandeur de brouillard d'huile, l'absence de toute évacuation déclenchant l'arrêt de la production de brouillard d'huile. Cet inconvénient a pour conséquence de ne pas créer un réservoir de brouillard d'huile disponible en permanence quel que soit l'état des branchements dudit dispositif. De plus, ce type de dispositif n'est pas susceptible d'accepter une pluralité de branchements d'alimentation pour une pluralité de dispositifs demandeurs de brouillard d'huile sans changer la densité du mélange.

Aussi, en s'appuyant sur le procédé et le dispositif permettant de le mettre en oeuvre, la demanderesse a poursuivi ses recherches à des fins d'optimisation de ces derniers, ces recherches ayant pour but de concevoir un dispositif susceptible de générer un brouillard d'huile non seulement en permanence quelle que soit la situation des branchements mais aussi d'accepter le branchement d'une pluralité de conduites à des fins d'alimentation en brouillard d'huile d'une pluralité de dispositifs demandeurs de brouillard d'huile.

Ces recherches ont abouti à un dispositif permettant d'obvier aux inconvénients précités et dont la caractéristique principale est remarquable en ce qu'il comporte un condenseur installé sur une quatrième conduite de dérivation disposée au niveau de la chambre supérieure du réservoir afin de filtrer le brouillard d'huile généré à l'intérieur de cette dernière pour être réinjecté, via un pulvérisateur situé en aval du condenseur et débouchant dans la chambre supérieure, le brouillard d'huile étant ainsi créé de façon permanente en maintenant la surpression à l'intérieur de ladite chambre supérieure.
Cette conduite de dérivation permet de créer en permanence un brouillard d'huile à l'intérieur de la chambre de stockage en autorisant l'évacuation de ce dernier lorsqu'il n'est pas exploité ou complètement utilisé. En effet, la présence de cette évacuation sert de soupape et autorise le fonctionnement du dispositif sans qu'il soit branché à une quelconque conduite d'alimentation en brouillard d'huile. Elle permet en outre de maintenir la surpression dans le réservoir autorisant ainsi une création surabondante de brouillard. Cette surabondance permanente du brouillard d'huile permet le branchement de plusieurs dispositifs demandeurs de brouillard d'huile sans affecter la densité du mélange air /huile.

Selon une caractéristique particulièrement avantageuse de l'invention, le dispositif comprend un troisième pulvérisateur débouchant dans la première conduite aller reliant le réservoir de stockage au carter, afin de diluer en air sous pression la quantité de brouillard d'huile prélevée en aval du réservoir et en amont du carter. Cette adaptation a pour objet d'autoriser le dosage de la richesse du brouillard d'huile avant son injection dans le carter.

Le dispositif de lubrification de l'invention peut générer, grâce à des réglages adéquats au niveau des variations de débit ou de pression, des brouillards d'huile permettant de graisser des broches d'un diamètre de 40 millimètres à 200 millimètres.

D'autres caractéristiques et d'autres avantages de la présente invention ressortiront plus clairement à la lecture de la description qui suit donnant, à titre d'exemples non limitatifs en regard des dessins annexés, deux modes de réalisation d'un dispositif de lubrification respectant les concepts fondamentaux de l'invention. Sur ces dessins:
La figure 1 est une vue schématique illustrant le premier mode de réalisation de ce dispositif.
La figure 2 est une vue schématique illustrant un deuxième mode de réalisation dudit dispositif.
La figure 3 est une vue schématique illustrant un troisième mode de réalisation dudit dispositif, sous une forme simplifiée.

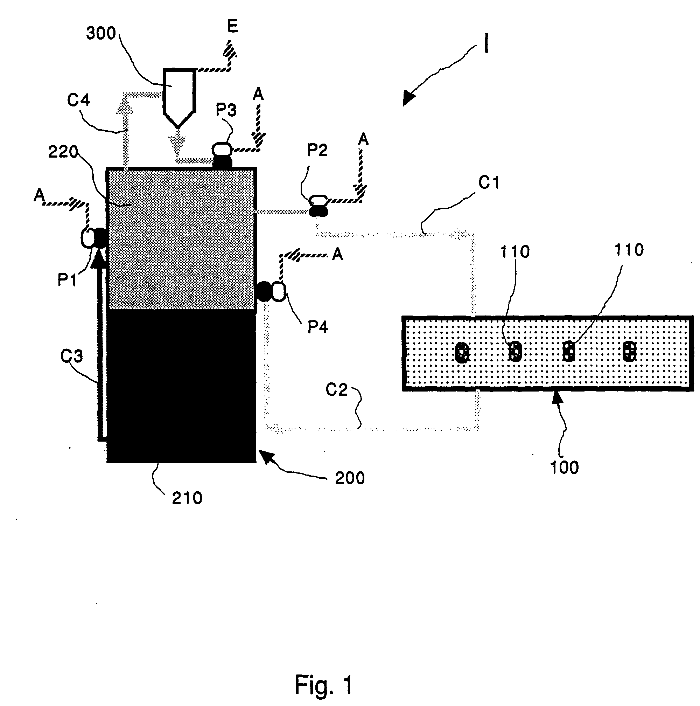

Tel qu'illustré sur le dessin de la figure 1, le dispositif de lubrification référence I dans son ensemble est destiné à assurer le graissage d'organes mécaniques et plus particulièrement de broches 110 contenues dans un carter étanche 100. A cet effet, ce dispositif I comporte un réservoir de stockage d'huile 200 relié au carter 100 par une première conduite C1 (dite aller) permettant d'amener la matière lubrifiante du réservoir 200 vers le carter 100, et une deuxième conduite C2 (dite retour) permettant de restituer, après passage dans les broches 110 du carter 100, la matière lubrifiante condensée à l'intérieur du réservoir 200.

Le niveau d'huile de ce réservoir est maintenu à mi-hauteur dans un espace délimitant la chambre inférieure 210, de manière à réserver dans la mi-hauteur supérieure un vide délimitant la chambre supérieure 220 dans laquelle sera créé, selon les dispositions fondamentales de l'invention, le susdit brouillard d'huile. A cet effet, un premier pulvérisateur P1 est installé sur le réservoir 200 en débouchant à l'intérieur de la chambre supérieure 220 et en étant raccordé d'une part, à une alimentation d'air sous pression A et d'autre part, à une troisième conduite C3 pour être alimenté en huile stagnant dans la chambre basse 210 dudit réservoir. Ce pulvérisateur P1 engendre ainsi dans la chambre supérieure 220 du réservoir 210, un brouillard d'huile dont une partie est, selon les besoins, prélevée pour être injectée via la première conduite aller C1 dans les broches 110 du carter 100.

Afin de doser la richesse de ce brouillard d'huile prélevé dans la chambre haute 220 du réservoir 200, un troisième pulvérisateur P2 est installé sur la conduite aller C1 en aval du réservoir 200 et en amont du carter 100. Ce troisième pulvérisateur P2 débouche sur le tronçon aval de la conduite aller C1 et est raccordé d'une part, au tronçon amont de la même conduite pour être alimenté en brouillard d'huile et d'autre part à une alimentation d'air sous pression (flèche A). Alors que le premier pulvérisateur P1 a pour objet de créer en permanence un brouillard d'huile dans le réservoir 200, le troisième pulvérisateur P2 a pour objet essentiel de doser la richesse de ce même brouillard d'huile en le diluant en sortie du réservoir 200 avant de l'injecter dans le carter 100.

Un deuxième pulvérisateur P3 est installé sur le réservoir 200 où il débouche dans la chambre supérieure 220 contenant le brouillard d'huile. Ce deuxième pulvérisateur P3 est raccordé d'une part à une alimentation d'air sous pression A, et d'autre part à une quatrième conduite dite de dérivation C4 sur laquelle est installé un condenseur 300 dont la cartouche filtrante permet de traiter le brouillard d'huile de la chambre 220, en autorisant l'évacuation vers l'extérieur de l'air en excès débarrassé de ses impuretés, tel qu'illustré par la flèche E. Ce condenseur 300 a également pour objet, via le deuxième pulvérisateur P3 de réinjecter l'huile dans le réservoir 200.

Un quatrième pulvérisateur P4 est également installé sur le réservoir 200 où il débouche dans la chambre supérieure 220 et où aboutissent d'une part, la deuxième conduite de retour C2 dont l'autre extrémité aboutit dans le carter 100, et d'autre part à une alimentation d'air sous pression A. Ce quatrième pulvérisateur P4 permet d'aspirer le brouillard d'huile et les condensats après passage dans les broches 110 du carter 100 afin de réinjecter ceux-ci sur la chambre 220 du réservoir 200.

Le fonctionnement du dispositif de lubrification I qui vient d'être ci-dessus décrit est simple et le suivant.

Un brouillard d'huile est créé en permanence dans la chambre 220 du réservoir 200 à partir de la conduite C3 reliant la chambre 210 à la chambre 220 et raccordée au pulvérisateur P1 qui projette la quantité d'huile aspirée dans la chambre 220, sous forme de brouillard. Une partie de ce brouillard d'huile de la chambre 220 est aspirée, via la première conduite aller C1 par le troisième pulvérisateur P2 jusqu'aux broches 110 du carter 100, dans lesquelles il sera pulvérisé sous une forme plus ou moins riche selon le débit de l'alimentation en air comprimé A du pulvérisateur P2. La deuxième conduite C2, à l'aide du quatrième pulvérisateur P4, permet de réinjecter le brouillard d'huile résiduel du carter 100 vers la chambre 220 du réservoir 210. Afin de maintenir la surpression dans le réservoir 200, le brouillard d'huile de la chambre 220 est filtré par le condenseur 300 via la quatrième conduite de dérivation C4, en autorisant l'évacuation vers l'extérieur (flèche E) de l'air dépourvu de son huile et la réinjection de l'huile condensée dans le réservoir 200.

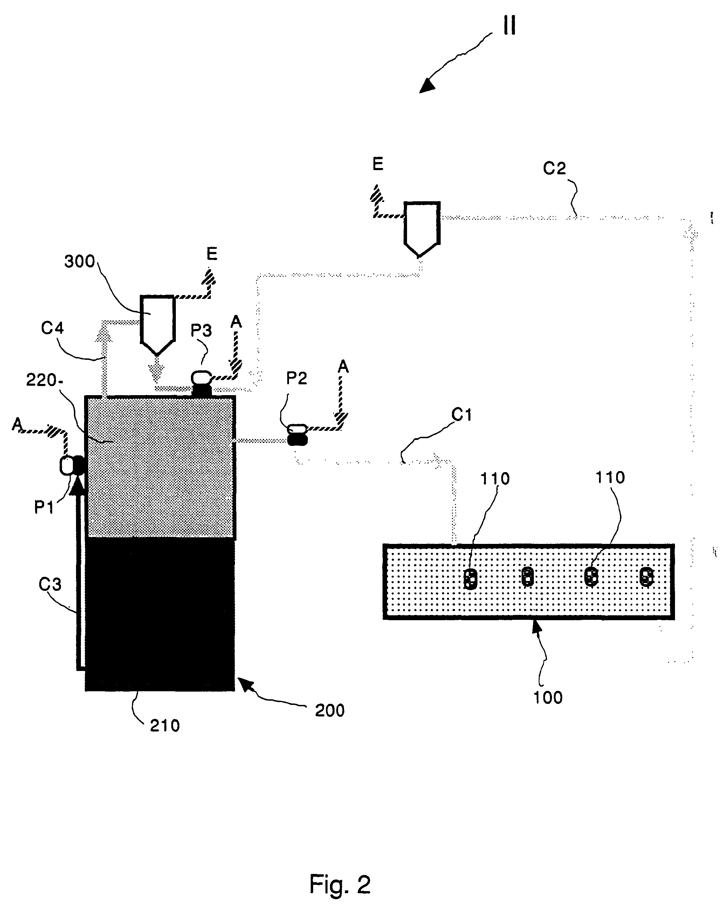

Le dessin de la figure 2 a pour objet d'illustrer une variante de réalisation du dispositif I. Dans ce dispositif référencé II dans son ensemble, la deuxième conduite retour C2 aboutit dans dans la chambre supérieure 220 via le deuxième pulvérisateur P3, permettant ainsi d'éliminer la quatrième pulvérisateur du dispositif I. En outre, un condenseur additionnel 310 a été installé sur cette deuxième conduite C2 afin de réaliser un premier filtrage de l'air avant réinjection dans le réservoir 200 et éviter des problèmes de surpression.

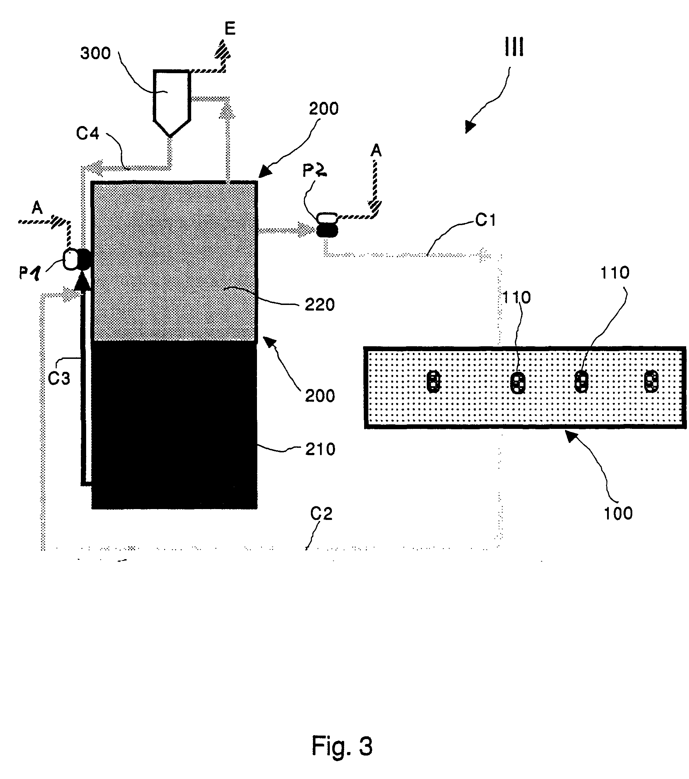

Le dessin de la figure 3 a pour objet d'illustrer la simplification de réalisation du dispositif I qui ne met en oeuvre que les deux premiers pulvérisateurs P1 et P2. Pour ce faire, les pulvérisateurs P3 et P4 du dispositif I sont éliminés et remplacés dans ce dispositif référence III par le pulvérisateur P1 dans lequel aboutissent, outre l'alimentation en air sous pression A, la deuxième conduite retour C2 reliant le carter 100 au réservoir 200, la troisième conduite C3 reliant la chambre inférieure 210 à la chambre supérieure 220 du réservoir 200 et la quatrième conduite de dérivation C4 sur laquelle est installé le condenseur 300.

On comprend que les dispositifs de lubrification I,II et III, qui viennent d'être ci-dessus décrits et représentés, l'ont été en vue d'une divulgation plutôt que d'une limitation. Bien entendu, divers aménagements, modifications et améliorations pourront être apportés aux exemples ci-dessus, sans pour autant sortir du cadre de l'invention pris dans ses aspects et dans son esprit les plus larges.

Afin de permettre une meilleure compréhension des dessins, une liste des références avec leurs légendes est ci-après énumérée.
- I, II,III: Dispositifs de lubrification
- 100: Carter
- 110: Broches ou organes mécaniques
- 200: Réservoir
- 210: Chambre inférieure contenant l'huile
- 220: Chambre supérieure où est engendré le brouillard d'huile
- 300: Condenseur
- 310: Condenseur additionnel
- C1: Conduite aller reliant le réservoir 200 au carter 100
- C2: Conduite retour reliant le carter 100 au réservoir 200
- C3: Conduite reliant la chambre 210 à la chambre 220
- C4: Conduite de dérivation disposée sur la chambre supérieure 220
- P1,P2,P3,P4: Pulvérisateurs
- A: Alimentation en air sous pression
- Flèche E: Evacuation de l'air vers l'extérieur

## Revendications

1. Dispositif de lubrification d'organes mécaniques (110) contenus dans au moins un carter étanche (100) renfermant des organes à lubrifier (110), du type de celui comportant
- un réservoir de stockage d'huile (200),
- au moins un pulvérisateur (P1) raccordé à une alimentation d'air sous pression (A) pour générer un brouillard d'huile,
le susdit réservoir de stockage d'huile (200) étant relié, via une première conduite aller (C1) et une deuxième conduite retour (C2), audit carter étanche (100), et
le susdit pulvérisateur (P1) étant installé sur le susdit réservoir (200) où il débouche à l'intérieur de la chambre supérieure (220) et où il est alimenté d'une part, en air sous pression (A), et d'autre part, en huile par aspiration à partir de la chambre inférieure (210) dudit réservoir, le susdit pulvérisateur (P1) étant disposé sur une troisième conduite (C3) reliant la chambre inférieure (210) à la chambre supérieure (220) dudit réservoir (200), **CARACTÉRISÉ PAR LE FAIT QU**'il comporte un condenseur (300) installé sur une quatrième conduite de dérivation (C4) disposée au niveau de la chambre supérieure (220) du réservoir (200) afin de filtrer le brouillard d'huile généré à l'intérieur de cette dernière pour être réinjecté, via un pulvérisateur (P1, P3) situé en aval du condenseur (300) et débouchant dans la chambre supérieure (220), de façon à créer en permanence ledit brouillard d'huile à l'intérieur dudit réservoir de stockage de l'huile en maintenant la surpression à l'intérieur de ladite chambre supérieure.

2. Dispositif selon la revendication 1, **CARACTERISE PAR LE FAIT QU'**il comprend au moins un troisième pulvérisateur (P2) débouchant dans la première conduite aller (C1) reliant le réservoir de stockage (200) au carter (100), afin de diluer le brouillard d'huile prélevé en aval du réservoir (200) et en amont du carter (100).

3. Dispositif selon l'ensemble des revendications 1 et 2, **CARACTERISE PAR LE FAIT QU'**il comporte quatre pulvérisateurs (P1, P2, P3 et P4) raccordés chacun à une alimentation d'air sous pression (A) et dont :
- le premier (P1), débouchant dans la chambre supérieure (220) du réservoir (200) pour générer le brouillard d'huile, est raccordé à la susdite troisième conduite (C3) reliant la chambre supérieure (220) à la chambre inférieure (210) dudit réservoir de stockage (200),
- le deuxième (P3), débouchant dans la chambre supérieure (220) du réservoir (200) pour y réinjecter le brouillard d'huile filtré par le condenseur (300), est raccordé à la susdite quatrième conduite de dérivation (C4) disposée au niveau de la chambre supérieure (220) du réservoir (200),
- le troisième (P2), débouchant dans la première conduite aller (C1) reliant le réservoir de stockage (200) au carter (100) pour diluer le brouillard d'huile prélevé dans le réservoir (200), est interposé sur ladite première conduite,
- et le quatrième (P4), débouchant dans la chambre supérieure (220) du réservoir (200) pour y réinjecter le brouillard d'huile et les condensats en sortie du carter (100), est raccordé à la susdite deuxième conduite retour (C2) reliant le carter (100) au réservoir (200).

4. Dispositif selon l'ensemble des revendications1 et 2, **CARACTERISE PAR LE FAIT QU**'il comporte trois pulvérisateurs (P1, P2 et P3) raccordés chacun à une alimentation d'air sous pression (A) et dont :
- le premier (P1), débouchant dans la chambre supérieure (220) du réservoir (200) pour générer le brouillard d'huile, est raccordé à la susdite troisième conduite (C3) reliant la chambre supérieure (220) à la chambre inférieure (210) dudit réservoir de stockage (200),
- le deuxième (P3), débouchant dans la chambre supérieure (220) du réservoir (200) pour y réinjecter le brouillard d'huile filtré par le condenseur (300), est raccordé d'une part à la susdite quatrième conduite de dérivation (C4) disposée au niveau de la chambre supérieure (220) supérieure (220) du réservoir (200) et d'autre part, à la susdite deuxième conduite retour (C2) reliant le carter (100) au réservoir (200).
- le troisième (P2), débouchant dans la première conduite aller (C1) reliant le réservoir de stockage (200) au carter (100) pour diluer le brouillard d'huile prélevé dans le réservoir (200), est interposé sur ladite première conduite,

5. Dispositif selon l'ensemble des revendications 1 et 2, **CARACTERISE PAR LE FAIT QU'**il comporte deux pulvérisateurs (P1 et P2) raccordés chacun à une alimentation d'air sous pression (A) et dont :
- le premier (P1), débouchant dans la première conduite aller (C1) reliant le réservoir de stockage (200) au carter (100) pour diluer le brouillard d'huile prélevé dans la chambre supérieure (220) du réservoir (200), est interposé sur ladite première conduite (C1),
- le troisième (P2), débouchant dans la chambre supérieure (220) du réservoir (200) pour générer le brouillard d'huile, est raccordé d'une part à la susdite troisième conduite (C3) reliant la chambre supérieure (200) à la chambre inférieure (210) dudit réservoir de stockage (200), d'autre part à la susdite quatrième conduite de dérivation (C4) disposée au niveau de la chambre supérieure (220) du réservoir (200), et enfin à la susdite deuxième conduite retour (C2) reliant le carter (100) au réservoir (200).

6. Dispositif selon l'une quelconque des revendications 3, 4 et 5, **CARACTERISE PAR LE FAIT QUE** la deuxième conduite retour (C2) relie le carter (100) au réservoir de stockage (200), via un condenseur additionnel (310).

## Patentansprüche

1. Vorrichtung zur Schmierung mechanischer Bauteile (110), die in einem diese Bauteile umschliessenden dichten Gehäuse (100) enthalten sind, mit:
- einem Vorratsbehälter (200) für Öl,
- wenigstens einem Zerstäuber (P1), der mit einer Druckluftquelle (A) verbunden ist um einen Ölnebel zu erzeugen,
wobei der Vorratsbehälter (200) für das Öl über eine erste Leitung (C1) für die Zufuhr und eine zweite Leitung (C2) für die Rückkehr mit dem dichten Gehäuse (100) verbunden ist und der Zerstäuber (P1) am Behälter (200) angeordnet ist und dabei im Inneren einer oberen Kammer (220) mündet und der einerseits mit Druckluft (A) und andererseits mit Öl versorgt wird, das aus einer unteren Kammer (210) des Behälters angesaugt wird, wobei der Zerstäuber (P1) in eine dritte Leitung (C3) eingesetzt ist, die die untere Kammer (210) mit der oberen Kammer (220) des Behälters (200) verbindet, **dadurch gekennzeichnet, dass** sie einen Kondensor (300) aufweist, der in eine vierte Leitung C4 zur Abzweigung eingesetzt ist, die auf Höhe der oberen Kammer (220) des Behälters (200) vorgesehen ist um den Ölnebel zu filtern, der im Inneren der letzteren erzeugt worden ist und ihn dieser erneut zuzuführen über einen Zerstäuber (P1, P3), der stromabwärts des Kondensors (300) angeordnet ist und in der oberen Kammer (220) mündet, sodass permanent dieser Ölnebel im Inneren des Vorratsgefässes für das Öl unter Aufrechterhaltung eines Überdrucks im Inneren der oberen Kammer erzeugt wird.

2. Vorrichtung nach Anspruch 1, **dadurch gekennzeichnet, dass** sie wenigstens einen dritten Zerstäuber (P2) aufweist, der in der ersten Leitung (C1) für die Zufuhr mündet, die den Vorratsbehälter (200) mit dem Gehäuse (100) verbindet um den stromabwärts des Behälters (200) und stromaufwärts des Gehäuses (100) abgezweigten Ölnebel zu verdünnen.

3. Vorrichtung nach der Gesamtheit der Ansprüche 1 und 2, **dadurch gekennzeichnet, dass** sie vier Zerstäuber (P1, P2, P3 und P4) aufweist, die jeweils mit einer Druckluftquelle (A) verbunden sind, wobei
- der erste (P1), der in der oberen Kammer (220) des Behälters (200) mündet um den Ölnebel zu erzeugen mit der dritten Leitung (C3) verbunden ist, die die obere Kammer (220) mit der unteren Kammer (210) des Ölvorratsbehälters (200) verbindet,
- der zweite (P3), der in der oberen Kammer (220) des Behälters (200) mündet um ihr den durch den Kondensor (300) gefilterten Ölnebel erneut zuzuführen, mit der vierten Leitung (C4) zur Abzweigung verbunden ist, die auf Höhe der oberen Kammer (220) des Behälters (200) angeordnet ist,
- der dritte (P2), der in der ersten Leitung (C1) zur Zufuhr mündet, die den Vorratsbehälter (200) mit dem Gehäuse (100) verbindet um den vom Behälter (200) abgezweigten Ölnebel zu verdünnen, in die erste Leitung eingesetzt ist,
- der vierte (P4), der in der oberen Kammer (220) des Behälters (200) mündet, um ihr den Ölnebel und die vom Gehäuse (100) abgegebenen Kondensate erneut zuzuführen, mit der zweiten Leitung (C2) zur Rückkehr verbunden ist, die das Gehäuse (100) mit dem Behälter (200) verbindet.

4. Vorrichtung nach der Gesamtheit der Ansprüche 1 und 2, **dadurch gekennzeichnet, dass** sie drei Zerstäuber (P1, P2 und P3) aufweist, die jeweils mit einer Druckluftquelle (A) verbunden sind, wobei
- der erste (P1), der in der oberen Kammer (220) des Behälters (2oo) mündet um den Ölnebel zu erzeugen, mit der dritten Leitung (C3) verbunden ist, die die obere Kammer (220) mit der unteren Kammer (210) des Vorratsbehälters (200) verbindet,
- der zweite (P3), der in der oberen Kammer (220) des Behälters (200) mündet um ihr den vom Kondensor (300) gefilterten Ölnebel erneut zuzuführen, einerseits mit der vierten Leitung (C4) zur Abzweigung verbunden ist, die auf Höhe der oberen Kammer (220) des Behälters (200) vorgesehen ist und andererseits mit der zweiten Leitung (C2) zur Rückkehr, die das Gehäuse (100) mit dem Behälter (200) verbindet,
- der dritte (P2), der in der ersten Leitung (C1) zur Zufuhr mündet, die den Vorratsbehälter (200) mit dem Gehäuse (100) verbindet um den vom Behälter (200) abgezweigten Ölnebel zu verdünnen, in die erste Leitung eingesetzt ist.

5. Vorrichtung nach der Gesamtheit der Ansprüche 1 und 2, **dadurch gekennzeichnet, dass** sie zwei Zerstäuber (P1 und P2) aufweist, die jeweils mit einer Druckluftquelle (A) verbunden sind, wobei:
- der erste (P1), der in der ersten Leitung (C1) zur Zufuhr mündet, die den Vorratsbehälter (200) mit dem Gehäuse (100) verbindet um den von der oberen Kammer (220) des Behälters (200) abgezweigten Ölnebel zu verdünnen, in die erste Leitung (C1) eingesetzt ist,
der dritte (P2), der in der oberen Kammer (220) des Behälters (200) mündet um den Ölnebel zu erzeugen, einerseits mit der dritten Leitung (C3), die die obere Kammer (220) mit der unteren Kammer (210) des Vorratsbehälters (200) verbindet, andererseits mit der vierten Leitung (C4) zur Abzweigung, die auf Höhe der oberen Kammer (220) des Behälters (200) angeordnet ist und schliesslich mit der zweiten Leitung (C2) zur Rückkehr, die das Gehäuse (100) mit dem Behälter (200) verbindet, verbunden ist.

6. Vorrichtung nach einem der Ansprüche 3, 4 und 5, **dadurch gekennzeichnet, dass** die zweite Leitung (C2) zur Rückkehr das Gehäuse (100) mit dem Vorratsgefäss (200) über einen zusätzlichen Kondensor (310) verbindet.

## Claims

1. A device for lubrication of mechanical components (110) contained in at least one sealed housing (100) enclosing mechanical components (110), of the type comprising :
- oil storage tank (200),
- at least one sprayer (P1) connected to compressed air supply (A) in order to generate an oil spray, the above-mentioned oil storage tank (200) being connected, via first supply pipe (C1) and second return pipe (C2), to said sealed housing (100), and
the above-mentioned sprayer (P1) being installed on the above-mentioned tank (200) where it opens to the inside upper chamber (220) and where it is supplied, on the one hand, with compressed air (A), and on the other hand, with oil by drawing from lower chamber (210) of said tank, the above-mentioned sprayer (P1) being arranged on third pipe (C3) connecting lower chamber (210) to upper chamber (220) of said tank (200), **CHARACTERIZED BY** THE FACT THAT it includes a condenser (300) installed on fourth bypass pipe (C4) arranged at the location of upper chamber (220) of tank (200) in order to filter the oil spray generated inside the latter in order to be reinjected, via a sprayer (P1, P3), located downstream from condenser (300) and opening into upper chamber (220), in order to continually create said oil spray inside said oil storage tank by maintaining the superpressure inside said upper chamber.

2. The device according to claim 1, **characterized by** the fact that it includes at least one third sprayer (P2) opening into first supply pipe (C1) connecting storage tank (200) to housing (100), in order to dilute the oil spray removed downstream from tank (200) and upstream from housing (100).

3. The device according to all of Claims 1 to 2, **characterized by** the fact that it has four sprayers (P1, P2, P3 and P4) each connected to a compressed air supply (A) and of which :
- the first (P1), opening into upper chamber (220) of tank (200) in order to generate the oil spray, is connected to the above-mentioned third pipe (C3) connecting upper chamber (220) to lower chamber (210) of said storage tank (200),
- the second (P3), opening into upper chamber (220) of tank (200) in order to reinject there the oil spray filtered by condenser (300), is connected to the above-mentioned fourth bypass pipe (C4) arranged at the location of upper chamber (220) of tank (200),
- the third (P2), opening into first supply pipe (C1) connecting storage tank (200) to housing (100) to dilute the oil spray removed from tank (200), is interposed on said first pipe,
- and the fourth (P4), opening into upper chamber (220) of tank (200) in order to reinject there the oil spray and the condensates from housing (100), is connected to the above-mentioned second return pipe (C2) connecting housing (100) to tank (200).

4. The device according to all of Claims 1 to 2, **characterized by** the fact that it has three sprayers (P1, P2, and P3) each connected to a compressed air supply (A) and of which :
- the first (P1), opening into upper chamber (220) of tank (200) in order to generate the oil spray, is connected to the above-mentioned third pipe (C3) connecting upper chamber (220) to lower chamber (210) of said storage tank (200),
- the second (P3), opening into upper chamber (220) of tank (200) in order to reinject there the oil spray filtered by condenser (300), is connected, on the one hand, to the above-mentioned fourth bypass pipe (C4) arranged at the site of upper chamber (220) of tank (200), and on the other hand, with the above-mentioned second return pipe (C2) connecting housing (100) to bank (200),
- the third (P2), opening into first supply pipe (C1) connecting storage tank (200) to housing (100) in order dilute the oil spray removed from tank (200) is placed between said first pipe.

5. The device according to all of Claims 3 to 6, **characterized by** the fact that it has two sprayers (P1 and P2) each connected to a compressed air supply (A) and of which
- the first (P1), opening into first supply pipe (C1) connecting storage tank (200) to housing (100) in order to dilute the oil spray removed from upper chamber (220) of tank (200), is placed between said first pipe (C1),
- the third (P2), opening into upper chamber (220) of tank (200) in order to generate the oil spray, is connected, on the one hand, to the above-mentioned third pipe (C3) connecting upper chamber (200) to lower chamber (210) of said storage tank (200), and on the other hand, to the above-mentioned fourth bypass pipe (C4) arranged at the location of upper chamber (220) of tank (200), and finally to the above-mentioned second return pipe (C2) connecting housing (100) to tank (200.

6. The device according to any one of Claims 3, 4, and 5, **characterized by** the fact that second return pipe (C2) connects housing (100) to storage tank (200) via additional condenser (310).
